Europäisches Patentamt

European Patent Office

Office européen des brevets

(19)

(11) Publication number: **0 030 409**
**B1**

# EUROPEAN PATENT SPECIFICATION

(12)

(45) Date of publication of patent specification: **28.09.83**

(51) Int. Cl.³: **C 04 B 7/44, F 27 B 7/20**

(21) Application number: **80303441.2**

(22) Date of filing: **30.09.80**

(54) Method of and plant for manufacturing pulverous or granular material, for example cement.

(30) Priority: **11.12.79 GB 7942683**

(43) Date of publication of application:
**17.06.81 Bulletin 81/24**

(45) Publication of the grant of the patent:
**28.09.83 Bulletin 83/39**

(84) Designated Contracting States:
**BE DE FR GB IT LU NL**

(56) References cited:
**AU - B - 490 561**
**DE - A - 2 656 163**
**DE - A - 2 700 710**
**FR - A - 2 328 674**

(73) Proprietor: **F.L. Smidth & Co. A/S**
**77 Vigerslev Allé**
**DK-2500 Valby Copenhagen (DK)**

(72) Inventor: **Enkegaard, Torben**
**c/o F.L. Smidth & Co. A/S. 77, Vigerslev Alle**
**DK-2500 Valby Copenhagen (DK)**

(74) Representative: **Brunner, Michael John et al,**
**GILL JENNINGS & EVERY 53-64 Chancery Lane**
**London WC2A 1HN (GB)**

Courier Press, Leamington Spa, England.

# Method of and plant for manufacturing pulverous or granular material, for example cement

The invention relates to the manufacture of pulverous or granular materials, for example cement, in accordance with the so-called "dry process".

The dry process may be carried out in a kiln plant which has a kiln, a cooler coupled after the kiln for cooling the product treated in the kiln and two pre-heaters, in one of which part of the raw material is heated by means of the kiln exit gases and in the other one of which the remainder of the raw material is heated by means of spent cooling air from the cooler which may then be returned to the cooler for reuse, (see DE A1 26 56 163 and FR A1 23 28 674). In other cases the air is not recycled, (see AU B 490 561 and DE A1 27 00 710). The raw material treated in the pre-heater and heated by the kiln exit gases may either be passed directly from the pre-heater to the kiln or via a precalciner coupled to the preheater for precalcining the raw materials after their pre-heating. Such pre-heaters, which are known per se and are for example shaft pre-heaters or cyclone pre-heaters together with their outlet and inlet pipes and fans are herein respectively referred to as "the kiln string", i.e. the pre-heater or pre-heaters heated by the kiln exit gases, and "the cooling air string", i.e. the pre-heater or pre-heaters heated by spent cooling air from the cooler.

The cooler may preferably be a grate cooler such as is commonly used in such plants, especially with the cement industry. This type of cooler has, unfortunately, the disadvantage that it requires an amount of cooling air significantly exceeding the amount of combustion air needed for use in the combustion process in the kiln and possibly also the precalciner. Thus, there is excess air emitted from the cooler which represents a considerable heat loss and also a serious problem of dedusting and consequential pollution. Similar problems may arise when using other cooler types than grate coolers.

According to the invention in a method of manufacturing pulverous or granular material, such as cement, in a kiln plant comprising a kiln for burning and sintering of raw materials, a cooler coupled after the kiln for cooling the product treated in the kiln, a first raw material pre-heater heated by kiln exit gases, and a second raw material pre-heater heated by spent cooling air from the cooler, all the raw material is fed to the second pre-heater and after pre-heating therein is passed direct to the first pre-heater for further treatment therein, while substantially the whole of the air used in the second pre-heater and cooled therein as a result of the pre-heating of the raw material in the pre-heater is returned to the cooler in which it is reused for cooling the kiln product.

If desired, the pre-heated raw material from the first pre-heater may be precalcined in a precalciner before being passed to the kiln.

The invention also includes a kiln plant for carrying out the above method, the kiln plant comprising a kiln for burning and sintering of raw materials, a cooler coupled after the kiln for cooling the product from the kiln, a first raw material pre-heater heated by kiln exit gases, a second raw material pre-heater heated by spent cooling air from the cooler, means for passing all the raw material to be treated in the plant to the second pre-heater, means for passing the raw material, after heating in the second pre-heater, to the first pre-heater for treatment therein, and means for returning substantially the whole of the cooled air from the second pre-heater to the cooler for reuse in cooling the kiln product.

By the method of the invention the whole of the excess air from a grate cooler can be utilized, the air being used partly in the kiln and partly in the second pre-heater so that the heat loss problem is considerably reduced and the dedusting problem eliminated, the spent cooling air following a substantially closed circuit from the cooler through the cooling air stream pre-heater and back to the cooler, cooling of the air being achieved in the pre-heater by its giving off heat to the raw material. Fresh cooling air for supplementing the return air can be supplied to the cooler in the usual way. Thus, with a plant according to the invention, the dust precipitator capacity in the plant can be considerably reduced and, furthermore, plant economy is improved.

One example of a plant according to the present invention will now be described with reference to the accompanying diagrammatic drawing.

The plant has two pre-heater strings, a kiln string A and a cooling air string B. The kiln string A comprises a pre-heater 1 and a precalciner 2 and the cooling air string B has a pre-heater 9.

In use, all the raw material to be treated in the plant is fed to the pre-heater 9 through a pipe 10 and is pre-heated by spent cooling air passed to the pre-heater 9 from the cooler 7 by way of a pipe 8. The air passed to the pre-heater is hot, having been used to cool raw material from the kiln 3 and, after heating the raw material fed to the pre-heater 9 leaves the pre-heater through a pipe 11 and is returned by way of a fan 12 to the cooler 7. If necessary, cold air is added at 22 to the returning air in the pipe 11. By means of a fan 14 additional atmospheric air further necessary for cooling in the cooler can be put in through the pipe 13.

The raw material pre-heated in the pre-heater 9 is passed from the bottom of the pre-heater through a pipe 16 by means of a pump 15 to the top of the pre-heater 1 for treatment therein. The raw material passes through the pre-heater 1 to the precalciner 2 to which combustion air is supplied through a riser pipe 4 from the kiln 3 and through a pipe 20 from the cooler 7. Thus, the total amount of air supplied to the cooler is split between the pre-heater strings A and B, that passing through the string B being recirculated.

Fuel for the precalciner 2 is supplied at 21. Pre-heated and precalcined material is passed from the precalciner 2 to the kiln inlet through a tube 5 and the kiln exit gases are extracted from the pre-heater 1 through the pipe 17 by means of a fan 18 and are then passed to a dust precipitator (not shown).

In the kiln the pre-heated and precalcined material is sintered and further treated by being burnt in the kiln by means of a burner 6 at the lower end of the kiln. The treated material then passes to the cooler 7 in which it is cooled by the cold air and leaves the cooler through an outlet 19.

Calculations have shown that given an air temperature of approximately 350°C in the pipe 8 and a consumption of 1.0 kg air/kg clinker, the temperature of the pre-heated raw material in the pipe 16 will be approximately 180°C, compared to approximately 60°C which is the normal temperature of raw material feed from a storage silo to a pre-heater. The temperature of the exit gases from the pre-heater A will be approximately 450°C. Thus, it can be seen that a substantial reduction in the heat loss can be achieved.

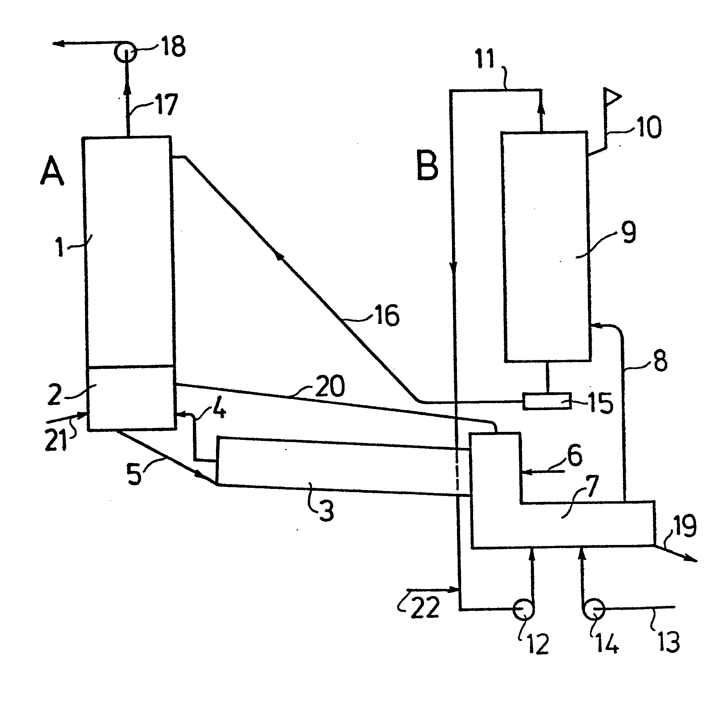

## Claims

1. A method of manufacturing pulverous or granular material in a kiln plant which comprises a kiln (3) for burning and sintering of raw material, a cooler (7) coupled after the kiln (3) for cooling the product treated in the kiln (3), a first raw material pre-heater (1) heated by kiln exit gases, and a second raw material pre-heater (9) heated by spent cooling air from the cooler (7), whereby substantially the whole of the air used in the second pre-heater (9) and cooled therein as a result of the pre-heating of the raw material in the pre-heater (9) is returned to the cooler (7) in which it is reused for cooling the kiln product characterized in that all the raw material is fed to the second pre-heater (9) and after pre-heating therein is passed directly to the first pre-heater (1) for further treatment therein.

2. A method according to claim 1, wherein the pre-heated raw material is fed from the first pre-heater (1) to the kiln (3) via a precalciner (2).

3. A method according to claim 1, characterized in that the raw materials are cement raw materials.

4. A kiln plant for use in the manufacture of pulverous or granular material, the kiln plant comprising a kiln (3) for burning and sintering raw materials, a cooler (7) coupled after the kiln (3) for cooling the product from the kiln, a first raw material pre-heater (1) arranged to be heated by kiln exit gases in use, a second raw material pre-heater (9) arranged to be heated by spent cooling air from the cooler, and means (11, 12) for returning substantially the whole of the cooled air from the second pre-heater (9) to the cooler (7) for reuse in cooling the kiln product, characterized in that means (10) are provided for passing all the raw material to be treated in the plant to the second pre-heater (9); and means (15, 16) are provided for passing the raw material, after heating in the second pre-heater (9), to the first pre-heater (10) for further treatment therein.

5. A kiln plant according to claim 4, further including a precalciner (2), disposed adjacent the outlet end of the first pre-heater (1) and fed therefrom, for precalcing the pre-heated raw material prior to its entry to the kiln (3).

## Revendications

1. Procédé de fabrication d'une matière pulvérulente ou granulaire dans une installation qui comporte un four (3) destiné à brûler et à agglomérer la matière première, un refroidisseur (7) disposé après le four (3) pour refroidir le produit traité dans le four (3), un premier préchauffeur (1) de matière première chauffé par les gaz sortant du four et un second préchauffeur (9) de matière première chauffé par de l'air de refroidissement épuisé provenant du refroidisseur (7), procédé dans lequel la quasi-totalité de l'air utilisé dans le second préchauffeur (9), et qui y est refroidi par suite du préchauffage de la matière première dans le préchauffeur (9), est recyclée vers le refroidisseur (7), dans lequel cet air est réutilisé pour refroidir le produit provenant du four, procédé caractérisé en ce que la totalité de la matière première est introduite dans le second préchauffeur (9) et, parès y avoir été préchauffée, elle passe directement dans le premier préchauffeur (1) pour y subir un traitement supplémentaire.

2. Procédé selon la revendication 1, dans lequel la matière première préchauffée est envoyée du premier préchauffeur (1), en passant par un précalcinateur (2), dans le four (3).

3. Procédé selon la revendication 1, caractérisé en ce que les matières premières sont des matières premières de production du ciment.

4. Installation de chauffage destinée à servir à la fabrication d'une matière pulvérulente ou granulaire, l'installation comprenant un four (3) destiné à brûler et à agglomérer des matières premières, un refroidisseur (7) disposé après le four (3) pour refroidir le produit provenant du four, un premier préchauffeur (1) de la matière première agencé de manière à être chauffé par les gaz sortant du four en fonctionnement, un second préchauffeur (9) de la matière première agencé de manière à être chauffé par de l'air de refroidissement usagé provenant du refroidisseur et un dispositif (11, 12) pour recycler la quasi-totalité de l'air refroidi provenant du second préchauffeur (9) vers le refroidisseur (7) pour sa réutilisation en vue de refroidir le produit provenant du four, installation caractérisée en ce qu'elle comporte un dispositif (10) pour faire passer la totalité de la matière première, à traiter dans l'installation, au second préchauffeur (9), et un dispositif (15, 16) pour faire passer la matière première, après sont chauffage dans le second préchauffeur (9), au premier préchauffeur (10) pour y subir un traitement supplémentaire.

5. Installation de chauffage selon la revendication 4, comprenant encore un précalcinateur (2), disposé près de l'extrémité de sortie du premier préchauffeur (1) et alimenté par lui, pour précalciner la matière première préchauffée avant sont entrée dans le four (3).

**Patentansprüche**

1. Verfahren zum Herstellen pulverförmigen oder körnigen Materials in einer Ofenanlage, die verfügt über einen Ofen (3) zum Brennen und Sintern von Rohmaterial, über einen Kühler (7) angeschlossen hinter dem Ofen (3) zum Kühlen des in dem Ofen (3) behandelten Produkts, über einen ersten Rohmaterialvorwärmer (1) beheizt durch die Ofenabgase und über einen zweiten Rohmaterialvorwärmer (9) beheizt durch Kühlabluft des Kühlers (7), wobei im wesentlichen die gesamte im zweiten Vorwärmer (9) verwendete und dort als Folge des Vorwärmens des Rohmaterials in dem Vorwärmer (9) gekühlte Luft zum Kühler (7) zurückgeführt wird, in dem sie zum Kühlen des Ofenprodukts wieder verwendet wird, dadurch gekennzeichnet, daß das gesamte Rohmaterial dem zweiten Vorwärmer (9) zugeführt und nach Vorwärmen in diesem direkt dem ersten Vorwärmer (1) zur dortigen Weiterbehandlung zugeführt wird.

2. Verfahren nach Anspruch 1, dadurch gekennzeichnet, daß das vorerwärmte Rohmaterial vom ersten Vorwärmer (1) dem Ofen (3) über eine Vorkalzinator (2) zugeführt wird.

3. Verfahren nach Anspruch 1, dadurch gekennzeichnet, daß die Rohmaterialien Zementrohmaterialien sind.

4. Ofenanlage zur Verwendung bei der Herstellung pulverförmigen oder körnigen Materials, welche Ofenanlage verfügt über einen Ofen (3) zum Brennen und Sintern von Rohmaterialien, über einen Kühler (7) agenschlossen hinter dem Ofen (3) zum Kühlen des Produkts des Ofens, über einen ersten Rohmaterialvorwärmer (1), der im Betrieb von heißen Ofenabgasen beheizbar ist, über einen zweiten Rohmaterialvorwärmer (9), der von Kühlabluft des Kühlers beheizbar ist, und über Mittel (11, 12) zur Rückführung im wesentlichen der gesamten gekühlten Luft des zweiten Vorwärmers (9) zum Kühler (7) zur Wiederverwendung beim Kühlen des Ofenprodukts, dadurch gekennzeichnet, daß Mittel (10) vorgesehen sind, um das gesamte in der Anlage zu behandelnde Rohmaterial dem zweiten Vorwärmer (9) zuzuführen, und daß Mittel (15, 16) vorgesehen sind, um das Rohmaterial nach dem Aufwärmen in dem zweiten Vorwärmer (9) dem ersten Vorwärmer (1) zur weiteren Behandlung in diesem zuzuführen.

5. Ofenanlage nach Anspruch 4, weiterhin aufweisend einen Vorkalzinator (4), angeordnet in der Nähe des Auslaßendes des ersten Vorwärmers (1) und versorgt von diesem zum Vorkalzinieren des vorerwärmten Rohmaterials vor dessen Eintritt zum Ofen (3).

1